Europäisches Patentamt

European Patent Office

Office européen des brevets

(11) Veröffentlichungsnummer: **0 209 952 B1**

# EUROPÄISCHE PATENTSCHRIFT

(45) Veröffentlichungstag der Patentschrift: **13.11.91**

(21) Anmeldenummer: **86201250.7**

(22) Anmeldetag: **16.07.86**

(51) Int. Cl.⁵: **G01N 23/20**, G01T 1/29, A61B 6/02

(54) **Verfahren zum Bestimmen der räumlichen Verteilung der Streuquerschnitte für elastisch gestreute Röntgenstrahlung und Anordnung zur Durchführung des Verfahrens.**

(30) Priorität: **20.07.85 DE 3526015**

(43) Veröffentlichungstag der Anmeldung:
**28.01.87 Patentblatt 87/05**

(45) Bekanntmachung des Hinweises auf die
Patenterteilung:
**13.11.91 Patentblatt 91/46**

(84) Benannte Vertragsstaaten:
**DE FR GB**

(56) Entgegenhaltungen:
**DE-A- 2 432 305**
**DE-A- 2 544 354**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

Patentinhaber: **N.V. Philips' Gloeilampenfa-**
**brieken**

**Groenewoudseweg 1**
**NL-5621 BA Eindhoven(NL)**

(84) Benannte Vertragsstaaten:
**FR GB**

(72) Erfinder: **Harding, Geoffrey, Dr.**
**Poststrasse 18c**
**W-2083 Halstenbek(DE)**
Erfinder: **Kosanetzky, Josef-Maria, Dr.**
**Langenharmer Ring 120**
**W-2000 Norderstedt 1(DE)**
Erfinder: **Neitzel, Ulrich, Dr.**
**Kipps Weg 3**
**W-2000 Hamburg 65(DE)**

(74) Vertreter: **David, Günther M. et al**
**Philips Patentverwaltung GmbH Wenden-**
**strasse 35 Postfach 10 51 49**
**W-2000 Hamburg 1(DE)**

## Beschreibung

Die Erfindung betrifft ein Verfahren zum Bestimmen der räumlichen Verteilung der Streuquerschnitte für elastisch gestreute Röntgenstrahlung in einem Untersuchungsbereich, der mit einem Primärstrahl geringen Querschnitts durchstrahlt wird, wobei die aus dem Untersuchungsbereich unter verschiedenen Winkeln austretende Streustrahlung von einer Anzahl von Detektoren erfaßt wird und wobei die Energie der Röntgenquanten im Primärstrahl und der Winkelbereich, unter dem die Detektoren die Streustrahlung erfassen, so gewählt sind, daß darin der Anteil der elastisch gestreuten Strahlung überwiegt, sowie eine Anordnung zur Durchführung des Verfahrens.

Eine solche Anordnung ist aus der Zeitschrift Phys. Med. Biol., 1985, Vol. 30, No. 2, Seiten 183-186 bekannt.

Dieses Verfahren nutzt die Tatsache aus, daß Streustrahlung, die mit der Richtung des Primärstrahls nur einen kleinen Winkel einschließt (z.B. kleiner als 12° überwiegend aus elastisch gestreuter Strahlung besteht, wenn die Energie der Röntgenquanten nicht zu hoch ist. Im Gegensatz zu nichtelastisch gestreuter Strahlung (Compton-Streustrahlung) entspricht das Energiespektrum elastisch gestreuter Strahlung dem des Primärstrahlenbündels. Die elastische Streustrahlung weist eine starke Winkelabhängigkeit auf mit einem ausgeprägten Maximum, dessen Lage von der durchstrahlten Materie und von der Härte der Strahlung im Primärstrahl abhängt und zwischen $1°$ und etwa $10°$ liegt.

Bei dem bekannten Verfahren erfolgt - ähnlich wie bei einem Computertomographen der ersten Generation - eine Relativverschiebung zwischen Primärstrahl und Untersuchungsbereich senkrecht zum Primärstrahl, bis der gesamte Untersuchungsbereich durchstrahlt ist, wonach die Richtung geändert wird, unter der der Röntgenstrahler den Untersuchungsbereich durchstrahlt, wonach erneut eine seitliche Verschiebung erfolgt usw. Bei jeder der unterschiedlichen Winkel- und Verschiebestellungen des Primärstrahls in bezug auf den Untersuchungsbereich wird die Intensität der Strahlung unter verschiedenen Streuwinkeln sowie in der Regel auch im Primärstrahl selbst erfaßt. Verwendet man jeweils nur die Meßwerte, die einem Streuwinkel, d.h. einem bestimmten Detektor zugeordnet sind, dann kann für diesen Streuwinkel die räumliche Verteilung der Streuquerschnitte für elastische Streustrahlung rekonstruiert werden. Auf gleiche Weise können aus den Meßwerten der anderen Detektoren Verteilungen für andere Streuwinkel rekonstruiert werden. Aufgrund der starken Abhängigkeit der Streuintensität von der chemischen Zusammensetzung des Streuzentrums, das innerhalb des Primärstrahls den Streuprozeß hervorruft, unterscheiden sich diese nach Streuwinkeln geordneten Rekonstruktionen der Verteilung der elastischen Streuquerschnitte wesentlich, so daß z.B. unterschiedliche Stoffe, die das gleiche Absorptionsvermögen haben, so daß sie in einem normalen Computertomogramm nicht unterschieden werden können, in den nach Streuwinkeln geordneten rekonstruierten Streuquerschnitts-Verteilungen voneinander unterschieden werden können, wenn diese Stoffe für den betreffenden Streuwinkel unterschiedliche Querschnitte aufweisen.

Als Strahlenquelle kann eine monochromatische Strahlenquelle verwendet werden, z.B. ein Radioisotop. Damit lassen sich verschiedene Stoffe sehr gut voneinander unterscheiden, jedoch haben diese Strahlenquellen in der Regel eine so geringe Intensität, daß relativ lange Meßzeiten erforderlich sind. Verwendet man statt dessen eine Röntgenröhre, die eine wesentlich größere Intensität haben kann, dann ergeben sich zwar die angestrebten kürzeren Meßzeiten, jedoch können verschiedene Stoffe nicht mehr so gut voneinander unterschieden werden, weil die Röntgenstrahlung polychromatisch ist und die Abhängigkeit der Streuquerschnitte vom Streuwinkel dabei weit weniger ausgeprägt ist als bei monochromatischer Strahlung.

Aufgabe der vorliegenden Erfindung ist es daher, das Verfahren der eingangs genannten Art so auszugestalten, daß auch bei Verwendung einer polychromatischen Strahlenquelle, beispielsweise einer Röntgenröhre, unterschiedliche Stoffe gut voneinander unterschieden werden können.

Diese Aufgabe wird erfindungsgemäß dadurch gelöst, daß die Energie der Röntgenquanten gemessen wird und daß die detektierten Röntgenquanten nach Gruppen geordnet und gezählt werden, wobei jede Gruppe die Röntgenquanten umfaßt, für die das Produkt aus Streuwinkel und Energie zumindest annähernd gleich ist.

Es sei an dieser Stelle erwähnt, daß aus der DE-A-24 32 305 an sich schon ein Verfahren zum Ermitteln der Streuquerschnitte in einem Untersuchungsbereich bekannt ist, bei dem dieser mit einem Primärstrahl geringen Querschnitts durchstrahlt wird, und bei dem die aus dem Untersuchungsbereich unter verschiedenen Winkeln austretende Strahlung mit einer Anzahl von die Energie der einzelnen Röntgenquanten messenden Detektoren getrennt erfaßt wird. Bei diesem bekannten Verfahren wird jedoch so harte Röntgenstrahlung (zwischen 200 keV und 2 MeV) verwendet, daß die Strahlung im wesentlichen durch Comptonstreuung geschwächt wird. Bei der Schwächung der Strahlung durch Comptonstreuung verringert sich die Energie der gestreuten Röntgenquanten bekanntlich in Abhängigkeit von dem jeweiligen Streuwinkel. Bei dem bekannten Verfahren wird nun die Energie der Röntgenquanten gemessen, um daraus den Streuwinkel und damit die Lage des Streuzentrums im Untersuchungsbereich und innerhalb des Primärstrahls bestimmen zu können, so daß in einer Stellung des Primärstrahls in bezug auf den Untersuchungsbereich die Streudichteverteilung längs des Primärstrahls rekonstruiert werden kann.

Die Erfindung basiert demgegenüber auf der Tatsache, daß der Streuwinkel, bei dem bei einem bestimmten Stoff der Streuquerschnitt ein Maximum hat, von der Energie der Röntgenstrahlung abhängig ist, und zwar in der Weise, daß dieser Streuwinkel zumindest annähernd umgekehrt proportional zur Energie der Röntgenquanten geändert wird. Zählt man daher die Röntgenquanten gruppenweise, wobei jede Gruppe die Röntgenquanten umfaßt, bei denen das Produkt aus der gemessenen Energie und dem Streuwinkel (der im wesentlichen durch die Anordnung des jeweiligen Detektors in bezug auf den Primärstrahl gegeben ist) zumindest annähernd einen bestimmten Wert erreicht, dann umfaßt jede Gruppe gerade die Röntgenquanten, die - bei monoenergetischer Strahlung - einem bestimmten Streuwinkel zugeordnet wären. Führt man daher die Rekonstruktion der Streudichteverteilung nach diesen Gruppen getrennt durch, dann können unterschiedliche Stoffe ähnlich gut unterschieden werden wie bei monochromatischer Röntgenstrahlung.

Die Erfindung wird nachstehend anhand der Zeichnung näher erläutert. Es zeigen:

Fig. 1    die mechanische Anordnung zur Erfassung der Streustrahlung in schematischer Darstellung,

Fig. 2    die Abhängigkeit der Strahlungsintensität vom Streuwinkel bei einem bestimmten Stoff für verschiedene Energien der Röntgenquanten, und

Fig. 3    eine Schaltung zur Verarbeitung der von den Detektoren gelieferten Signale.

In Fig. l ist mit l eine Strahlenquelle in Form eines Röntgenstrahlers bezeichnet, in dessen Strahlengang eine Blende 2 angeordnet ist, die einen Primärstrahl 3 mit geringem Querschnitt zu seiner Ausbreitungsrichtung (pencil beam) ausblendet. Der Primärstrahl 3 durchsetzt einen Untersuchungsbereich 4, in dem ein Körper, jedoch auch ein technisches Objekt, angeordnet sein kann. Jenseits des Untersuchungsbereiches 4 - in bezug auf die Strahlenquelle - ist eine Detektoranordnung 5 angeordnet, die aus einer Anzahl von Detektoren D0, Dl...DN besteht. Der Detektor D0 ist im Primärstrahl angeordnet, während die anderen Detektoren Dl...DN sich auf konzentrisch dazu angeordneten Kreisbögen befinden und vorzugsweise ringförmig ausgebildet sind. Die Detektoren D0, Dl...DN sind so ausgebildet, daß die Amplitude der elektrischen Impulse, die bei der Detektion eines Röntgenquantes erzeugt werden, proportional zur Energie des betreffenden Röntgenquantes ist. Es kann sich dabei beispielsweise um Halbleiterdetektoren handeln z.B. um Germaniumdetektoren oder um Szintillationsdetektoren, etwa um mit Thallium aktivierte Natriumjodid-Detektoren. In der Zeichnung sind der Einfachheit halber nur fünf Detektoren dargestellt (N = 4). In der Praxis sollten jedoch wesentlich mehr Detektoren verwendet werden, z.B. N = 30.

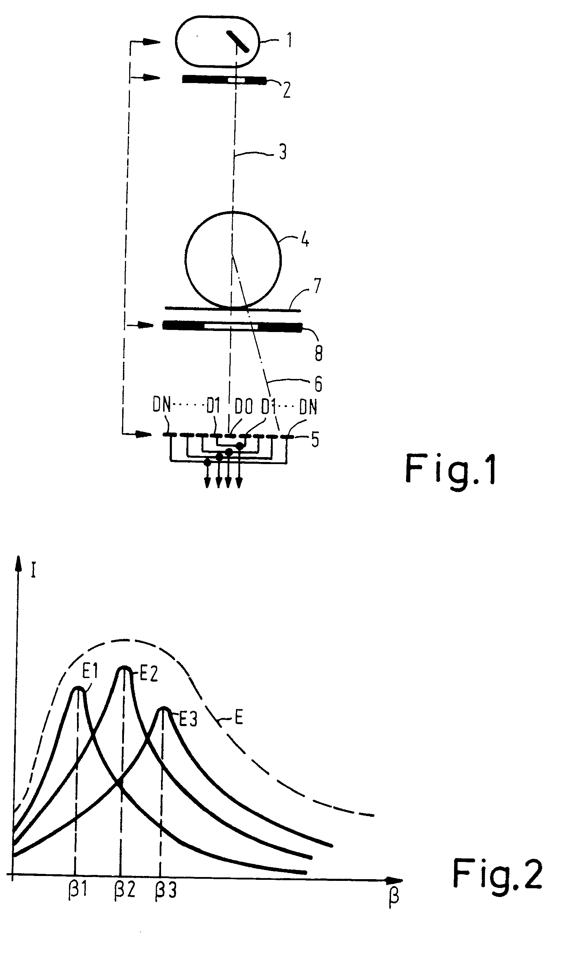

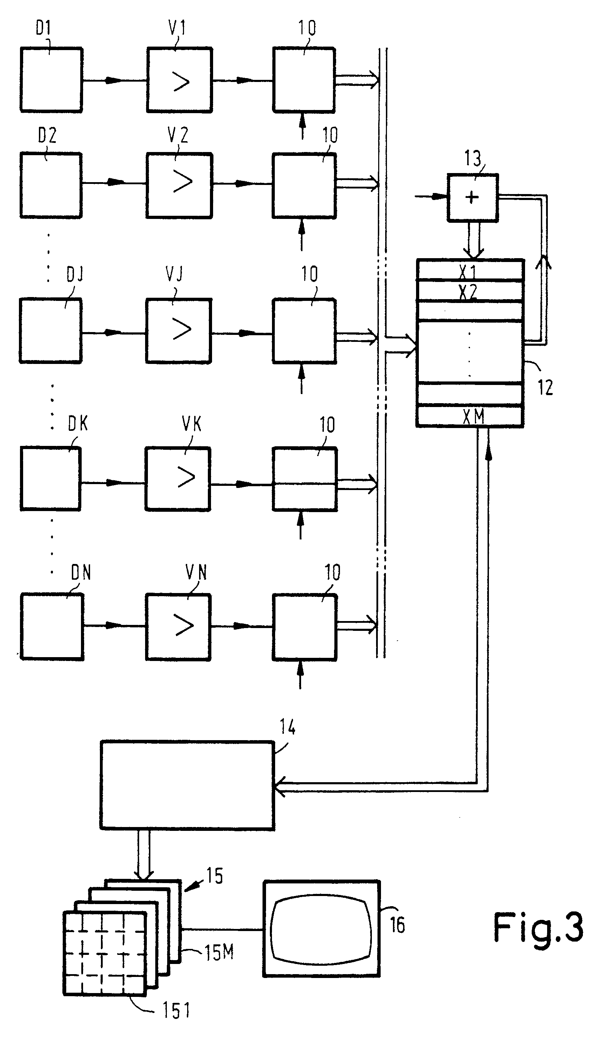

Die Detektoren Dl...DN erfassen jeweils die im Primärstrahl 3 und im Untersuchungsbereich 4 erzeugte, unter einem bestimmten Winkel mit dem Primärstrahl bzw. in einem kleinen Bereich um diesen Winkel austretende Streustrahlung. Jedem Detektor ist also ein bestimmter Winkel zugeordnet. Falls diese Zuordnung zu ungenau sein sollte, könnte sie korrigiert werden, wie in der am 5.9.1985 veröffentlichten deutschen Anmeldung DE-34 06 905 in Verbindung mit Fig. 2 und 3 beschrieben. Der Winkel, unter dem die Detektoren die Streustrahlung erfassen, ist auf etwa l0° beschränkt; der Winkel, unter dem der Streustrahl 6 vom Untersuchungsbereich auf den äußersten Detektor DN trifft, beträgt also etwa l0°. Bei größeren Winkeln ist bei den zu verwendenden Röhrenspannungen (kleiner als l50 kV) der Anteil der elastischen Streustrahlung zu gering.

Zwischen dem Körper 4, der sich auf der Tischplatte 7 eines nicht näher dargestellten Untersuchungstisches befindet, und der Detektoranordnung 5 befindet sich eine weitere Blende 8, deren Öffnung so bemessen ist, daß die im Primärstrahl 3 innerhalb des Untersuchungsbereiches 4 erzeugte Streustrahlung den Detektor DN gerade noch treffen kann. Dadurch kann der Einfluß der im Untersuchungsbereich 4 mehrfach gestreuten Streustrahlung unterdrückt werden. Noch besser läßt sich diese Mehrfach-Streustrahlung unterdrücken, wenn zwischen der Detektoranordnung 5 und unter dem Untersuchungsbereich 4 nicht näher dargestellte Lamellen aus strahlenabsorbierendem Material kegelstumpfförmig angeordnet sind derart, daß jeder Detektor durch diese Lamellen hindurch nur den Teil des Untersuchungsbereiches erfassen kann, der vom Primärstrahl durchsetzt ist.

Wie durch die gestrichelte Linie 9 angedeutet, sind die Strahlenquelle l, die Blenden 2 und 8 und die Detektoranordnung 5 mechanisch miteinander gekoppelt, so daß eine Relativbewegung zwischen dieser Anordnung und dem Untersuchungsbereich 4 möglich ist. Zur Erfassung eines ebenen Untersuchungsbereiches wird - wie bei Computertomographen der ersten Generation - der Primärstrahl 3 seitlich verschoben, so daß er sukzessive den ebenen Untersuchungsbereich durchsetzt und anschließend wird der Körper gedreht, wonach der Primärstrahl in der gleichen Ebene verschoben wird usw., bis jeder Detektor die Streustrahlung in einer Vielzahl von Winkelpositionen und von Verschiebepositionen erfaßt hat. - Insoweit als bisher beschrieben ist die Anordnung im wesentlichen aus der Zeitschrift Phys. Med. Biol., 1985, Vol. 30, No. 2, Seiten l83-l86 bekannt und in der älteren Anmeldung P 34 06 905 beschrieben.

In Fig. 2 ist für einen Stoff der Verlauf der Streuintensität als Funktion des Streuwinkels für verschiedene Energien El, E2, E3 dargestellt, wobei die Beziehung gilt El> E2> E3. Man erkennt, daß die Intensität, d.h. die Anzahl der registrierten Röntgenquanten pro Zeiteinheit für jede Energie ein ausgeprägtes Maximum besitzt. Ein Stoff mit einer anderen chemischen Zusammensetzung hat bei der gleichen Energie einen anderen Kurvenverlauf, jedoch ebenfalls mit einem ausgeprägten Maximum. Aufgrund dieser ausgeprägten Winkelabhängigkeit kann man daher die beiden Stoffe gut voneinander unterscheiden, wenn Röntgenstrahlung mit nur einer Energie (z.B. nur E3), d.h. monochromatische Röntgenstrahlung, benutzt wird. Die Intensität von monochromatischen Röntgenstrahlenquellen, z.B. von Radioisotopen, ist jedoch sehr gering, so daß sich lange Meßzeiten ergeben würden. Eine Röntgenröhre liefert Röntgenstrahlung mit wesentlich höherer Intensität, so daß sich kürzere Meßzeiten ergeben. Jedoch besitzen Röntgenröhren ein kontinuierliches (Bremsstrahlungs-) Spektrum, dessen höchste Energie (in keV) der Spannung an der Röntgenröhre (in kV) entspricht. Da in diesem Spektrum bis zu dieser Grenzenergie alle Energien vertreten sind, leuchtet es ein, daß bei einem solchen Energiespektrum die Intensität als Funktion des Streuwinkels nur ein schwach ausgeprägtes, breites Maximum besitzt, wie in Fig. 2 durch die gestrichelte Linie E angedeutet. Die entsprechende Kurve für einen anderen Stoff ist zwar nicht ganz mit dieser identisch, besitzt jedoch einen sehr breiten Überlappungsbereich, so daß es schwierig ist, zwei verschiedene Stoffe aufgrund der Streuwinkelabhängigkeit der Intensität der elastisch gestreuten Strahlung voneinander zu unterscheiden.

Die Erfindung nutzt die Tatsache aus, daß zwischen der Energie der Röntgenquanten und dem Streuwinkel die Beziehung gilt:

$$El \cdot \sin(\beta l/2) = E2 \cdot \sin(\beta 2/2) = X$$

Dabei ist ßl, ß2, ß3 der Streuwinkel für die Energie El, E2 bzw. E3. Bei kleinen Winkeln kann man aber ohne großen Fehler $\sin(\beta) = \beta$ setzen, so daß gilt:

$$El \cdot \beta l = E2 \cdot \beta 2 \sim X$$

Das Produkt aus Energie und Streuwinkel ist dem sogenannten Impulsübertrag X (momentum transfer) proportional. Die Intensität der Röntgenstrahlung, d.h. die Zahl der Röntgenquanten pro Zeiteinheit, hat daher als Funktion dieses Produktes bei polychromatischer Strahlung etwa den gleichen Verlauf wie bei monochromatischer Strahlung die Intensität der Strahlung als Funktion des Streuwinkels. Bestimmt man daher für jedes Röntgenquant das Produkt aus der Energie dieses Quants und dem Streuwinkel und zählt die Röntgenquanten, die jeweils das gleiche Produkt aufweisen, dann kann man aufgrund der unterschiedlichen Verläufe der Zahl der Röntgenquanten als Funktion des genannten Produktes zwei verschiedene Stoffe gut voneinander unterscheiden.

In Fig. 3 ist eine Schaltung dargestellt, die die Signale der Detektoren Dl...DN entsprechend verarbeitet. Dabei ist für jeden Detektor ein Kanal vorgesehen, der außer aus dem Detektor selbst aus einem nachgeschalteten Verstärker Vl, V2...VN und einem schnellen Digital-Analog-Wandler l0 besteht, der das Ausgangssignal des vorgeschalteten Verstärkers in ein dual codiertes digitales Datenwort umsetzt.

Die Verstärkungen der Verstärker Vl...VN sind den Streuwinkeln ßl...ßN proportional, unter denen die vorgeschalteten Detektoren Dl...DN die Streustrahlung jeweils erfassen. Wenn also beispielsweise der Detektor DJ die Streustrahlung unter einem Winkel ß und der Detektor DK die Streustrahlung unter einem Winkel nß erfaßt, wobei n ein Faktor ist, der größer als l ist, dann ist die Verstärkung des dem Detektor DK nachgeschalteten Verstärkers VK um den Faktor n größer als die Verstärkung des Verstärkers VJ. Aus diesem Grund und weil die Amplitude der Ausgangssignale der Detektoren proportional zur Energie des detektierten Röntgenquants ist, erscheinen am Ausgang der Verstärker Vl...VN bei der Detektion von Röntgenquanten durch den zugeordneten Detektor Dl...DN Signale, deren Amplitude dem Produkt aus dem Streuwinkel und der Energie des Röntgenquantes proportional ist.

Die Digital-Analog-Wandler müssen genügend schnell sein, um bei jeder Detektion eines Röntgenquantes durch den vorgeschalteten Detektor ein Signal erzeugen zu können, das der Amplitude des Ausgangssignals des Verstärkers Vl entspricht. Sie können beispielsweise jeweils einen Kondensator enthalten, der über einen Spitzenwertgleichrichter durch den Ausgangsimpuls des vorgeschalteten Verstärkers aufgeladen wird und der anschließend durch einen konstanten Strom wieder vollständig entladen wird. Die Entladungsdauer ist dabei proportional zum Produkt aus der Energie des Röntgenquantes und zur Verstärkung des vorgeschalteten Verstärkers, d.h. zum Streuwinkel des vorgeschalteten Detektors. Die Entladungsdauer wird mittels eines elektronischen Zählregisters gemessen, das während der Entladungsdauer die Impulse eines Oszillators mit konstanter Frequenz zählt, wobei der Beginn der Kondensatorentladung noch mit den Oszillatorimpulsen synchronisiert wird. Die Auslösesignale für die Analog-Digital-Wandler 10 werden dabei von den Ausgangssignalen der vorgeschalteten Detektoren abgeleitet.

Die Ausgänge der Digital-Analog-Wandler 10 sind mit den Adreßeingängen eines Speichers 12 gekoppelt. Jedesmal wenn einer der Wandler einen Spannungsimpuls in ein digitales Datenwort umgesetzt hat, wird die diesem Datenwort entsprechende Adresse in dem Speicher 12 aufgerufen. Gleichzeitig wird ein Addierer 13 aktiviert, der zu dem Inhalt des aufgerufenen Speicherplatzes eine 1 addiert und das Ergebnis in den gleichen Speicher zurückschreibt. In einer definierten Stellung des Primärstrahls bezüglich des Untersuchungsbereichs, d.h. bei einer Messung, werden also auf den verschiedenen Speicherplätzen des Speichers 12 die Röntgenquanten gezählt, deren Produkt X1, X2...XM aus Quantenenergie und Streuwinkel jeweils etwa den gleichen Wert hat. Somit wirken die Wandler 10 in Verbindung mit dem Speicher 12 und dem Addierer 13 als Impulshöhenanalysatoren.

Die Zahl der Gruppen X1...XM, denen die Röntgenquanten zugeordnet sind, sollte dabei etwa doppelt so groß sein wie die Zahl der Detektoren. Da der Speicher 12 und der Addierer 13 Signale von allen N Kanälen verarbeiten müssen, müssen sie bei hohen Zählraten eine hohe Verarbeitungsgeschwindigkeit aufweisen. Für den Fall, daß die Verarbeitungsgeschwindigkeit nicht ausreicht, kann für jeden Kanal oder jeweils für einen Teil der Kanäle je ein Speicher 12 und ein Addierer 13 vorgesehen sein. Am Ende der Messung müssen lediglich die Speicherinhalte addiert werden, die dem gleichen Produkt X1, X2 bzw. XM entsprechen.

Nach jeder Messung werden die im Speicher 12 gespeicherten Werte aufgerufen und in einem Microcomputer 14 weiterverarbeitet, beispielsweise so, wie in der deutschen Anmeldung P 34 06 905 beschrieben. Für jede Messung kann dabei eine Korrektur entsprechend der Schwächung der Primärstrahlung durch den Körper erfolgen. Diese Schwächung ergibt sich aus dem Ausgangssignal des Detektors D0, der im Primärstrahl angeordnet ist. Wenn auf diese Weise sämtliche Messungen durchgeführt sind, kann der Microcomputer für jedes Produkt X1, X2...XM getrennt die Streuverteilung in den einzelnen Punkten der Untersuchungsebene berechnen und diese Werte in einem Speicher 15 speichern, der für jedes Produkt X1...XM einen gesonderten Speicherbereich 151...15M aufweist. Um zu vermeiden, daß die Eigenschaften des Systems (z.B. das Spektrum der Stahlung der Röntgenröhre, die Detektorkennlinie usw.) die Rekonstruktion der Verteilung der Streuquerschnitte beeinflussen, ist es erforderlich, die für die verschiedenen Produkte X1, X2...XM erhaltenen Werte durch Referenzwerte zu dividieren, die sich für die dieselben Produkte bei Eichmessungen an einem Eichkörper, vorzugsweise aus Plexiglas, ergeben. Die so normierten Werte geben somit die relative Streufunktion bezogen auf das Referenzmedium wieder. Diese Eichmessung muß nur einmal durchgeführt werden, wenn die Meßbedingungen sich nicht zeitlich ändern. Bei nicht konstanten Bedingungen muß sie wiederholt werden, z.B. jedesmal vor und/oder nach einer Untersuchung.

Die auf diese Weise entstandenen Bilder können - wiederum nach Produkten X1...XM getrennt - einer Wiedergabeeinheit 16 zugeführt werden. Die auf diese Weise erhaltenen Bilder liefern also für jeden Bildpunkt den Verlauf der Streustärke als Funktion von X bzw. als Funktion des Streuwinkels. Damit geben sie Aufschlüsse über die chemische Zusammensetzung des durchstrahlten Bereiches.

Statt durch einen Verstärker mit entsprechend eingestellter Verstärkung könnte das Produkt aus Energie und Streuwinkel in den einzelnen Kanälen auch durch eine den Umsetzern 10 nachgeschaltete Multiplizierstufe oder dadurch erfolgen, daß die Umsetzer als multiplizierende Digital-Analog-Wandler ausgeführt werden; der Aufwand dafür wäre jedoch in der Regel größer als bei der in Fig. 3 beschriebenen Lösung.

## Patentansprüche

1. Verfahren zum Bestimmen der räumlichen Verteilung der Streuquerschnitte für elastisch gestreute Röntgenstrahlung in einem Untersuchungsbereich, der mit einem Primärstrahl geringen Querschnitts durchstrahlt wird, wobei die aus dem Untersuchungsbereich unter verschiedenen Winkeln austretende Streustrahlung von einer Anzahl von Detektoren erfaßt wird und wobei die Energie der Röntgenquanten im Primärstrahl und der Winkelbereich, unter dem die Detektoren die Streustrahlung erfassen, so gewählt sind, daß darin der Anteil der elastisch gestreuten Strahlung überwiegt, dadurch gekennzeichnet, daß die Energie der Röntgenquanten gemessen wird und daß die detektierten Röntgenquanten nach Gruppen geordnet und gezählt werden, wobei jede Gruppe die Röntgenquanten umfaßt, für die das Produkt aus Streuwinkel und Energie zumindest annähernd gleich ist.

2. Anordnung zur Durchführung des Verfahrens nach Anspruch 1 mit einem Röntgenstrahler (1), Mitteln (2) zum Ausblenden eines Primärstrahls (3) mit geringem Querschnitt, aus dem von dem Röntgenstrahler emittierten Strahlenbündel, Detektoren (DI...DN) mit definierter räumlicher Lage bezüglich des Primärstrahls und mit Mitteln zum Verschieben des Primärstrahls in bezug auf den Untersuchungsbereich,

dadurch gekennzeichnet, daß die Detektoren (DI...DN) so ausgebildet sind, daß bei der Detektion von Röntgenquanten Impulse mit von der Energie des Röntgenquantes abhängiger Amplitude erzeugt werden, daß den Detektoren Impulshöhendiskriminatoren (I0...I3) nachgeschaltet sind, daß Mittel (VI...VNI; I0) zur Erzeugung von dem Produkt der gemessenen Energie und des Streuwinkels proportionalen Produktsignalen und eine Speicheranordnung (I2) vorgesehen sind, in der die Zahl der Röntgenquanten speicherbar ist, deren zugeordnetes Produktsignal jeweils in einem bestimmten Bereich liegt.

3. Anordnung nach Anspruch 2,
dadurch gekennzeichnet, daß zwischen jedem Impulshöhenanalysator (I0...I3) und dem zugeordneten Detektor (DI...DN) ein Verstärker (VI...VN) geschaltet ist und daß die Verstärkung der Verstärker dem Streuwinkel (βI...βN) proportional ist, unter dem der damit gekoppelte Detektor (DI...DN) jeweils die Streustrahlung erfaßt.

**Claims**

1. A method for determining the spatial distribution of the scattering cross-sections for elastically scattered X-rays in an area of examination irradiated by a primary beam of small cross-section, wherein the scattered radiation emanating from the examination area at different angles is detected by a number of detectors and wherein the energy of the X-ray quanta in the primary beam and the angular range in which the detectors detect the scattered radiation are selected in such a way that the proportion of elastically scattered radiation therein is predominant,
characterized in that the energy of the X-ray quanta is measured, the detected X-ray quanta being arranged in groups and counted, each group containing the X-ray quanta for which the product of scattering angle and energy is at least approximately equal.

2. An arrangement for carrying out the method claimed in Claim 1, comprising an X-ray source (1), means (2) for forming a primary beam (3) of small cross-section from the beam of rays emitted by the X-ray source, detectors (D1...DN) which occupy a defined spatial position with respect to the primary beam, and means for displacing the primary beam with respect to the examination area,
characterized in that the detectors (D1...DN) are constructed so that upon detection of X-ray quanta pulses are generated whose amplitude depends on the energy of the X-ray quantum, pulse height discriminators (10...13) being connected subsequent to the detectors, means (V1...VN1; 10) being provided for generating product signals proportional to the measured energy and the scattering angle, and a storage device (12) being provided which can store the number of X-ray quanta whose associated product signal lies each time within a given range.

3. An arrangement as claimed in Claim 2,
characterized in that an amplifier (V1...VN) is connected between each pulse height analyzer (10...13) and the associated detector (D1...DN), the gain of the amplifiers being proportional to the scattering angle (β1...βn) at which the detector (D1...DN) coupled thereto detects the respective scattered radiation.

**Revendications**

1. Procédé pour la détermination de la répartition spatiale des sections de diffusion pour un rayonnement X diffusé élastiquement dans un domaine d'examen qui est traversé par un faisceau primaire de faible section, le rayonnement diffusé émanant sous divers angles du domaine d'examen étant capté par un certain nombre de détecteurs et l'énergie des quanta de rayons X dans le faisceau primaire ainsi que le domaine angulaire dans lequel les détecteurs captent le rayonnement diffusé étant choisis tels que la proportion du rayonnement diffusé élastiquement y soit prépondérante, caractérisé en ce que l'énergie des quanta de rayons X est mesurée et que les quanta de rayons X détectés sont classés par groupes et comptés, chaque groupe comprenant les quanta de rayons X pour lesquels le produit de l'angle de diffusion et de l'énergie est au moins à peu près le même.

2. Dispositif pour l'exécution du procédé suivant la revendication 1 qui comprend un générateur de rayons X (1), des moyens (2) pour diaphragmer le faisceau de rayonnement émis par le générateur de rayons X pour en isoler un faisceau primaire (3) de faible section, des détecteurs (D1, ...DN) présentant une position spatiale définie par rapport au faisceau primaire et des moyens pour déplacer le faisceau primaire par rapport au domaine d'examen, caractérisé en ce que les détecteurs (D1, ...,DN) sont conçus tels que des impulsions d'une amplitude dépendant de l'énergie du quantum de rayons X soient produites lors de la détection de quanta de rayons X, que les détecteurs sont suivis de discriminateurs de hauteur d'impulsion (10 à 13), que sont prévus des moyens (V1, ..., VN1; 10) pour former des signaux de produit proportionnels au produit de l'énergie mesurée et de l'angle de diffusion et un dispositif de stockage (12) dans lequel peut être stocké le nombre de quanta de rayons X pour lesquels le signal de produit tombe chaque fois dans un domaine déterminé.

3. Dispositif suivant la revendication 2, caractérisé en ce qu'un amplificateur (VI, ..., VN) est connecté entre chaque analyseur de hauteur d'impulsion (10 à 13) et le détecteur associé (D1, ..., DN) et que l'amplification des amplificateurs est proportionnelle à l'angle de diffusion ($\beta1$, ..., $\beta N$) sous lequel le détecteur (D1, ..., DN) qui y est couplé détecte chaque fois le rayonnement diffusé.

Fig.1

Fig.2

Fig.3